(19) Europäisches Patentamt
European Patent Office
Office européen des brevets

(11) **EP 3 237 960 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(51) Int Cl.:
***G02B 27/01*** *(2006.01)*

(21) Anmeldenummer: **15813000.5**

(22) Anmeldetag: **10.12.2015**

(86) Internationale Anmeldenummer:
**PCT/EP2015/079251**

(87) Internationale Veröffentlichungsnummer:
**WO 2016/102190 (30.06.2016 Gazette 2016/26)**

(54) **ABBILDUNGSOPTIK ZUM ERZEUGEN EINES VIRTUELLEN BILDES UND DATENBRILLE**

IMAGING OPTICAL UNIT FOR GENERATING A VIRTUAL IMAGE AND SMARTGLASSES

OPTIQUE DE REPRODUCTION PERMETTANT DE PRODUIRE UNE IMAGE VIRTUELLE ET LUNETTES INTELLIGENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2014 DE 102014119550**

(43) Veröffentlichungstag der Anmeldung:
**01.11.2017 Patentblatt 2017/44**

(73) Patentinhaber: **tooz technologies GmbH**
**73430 Aalen (DE)**

(72) Erfinder:
• **DOBSCHAL, Hans-Jürgen**
**99510 Kleinromstedt (DE)**
• **LINDIG, Karsten**
**99084 Erfurt (DE)**

(74) Vertreter: **PATERIS Patentanwälte PartmbB**
**Markgrafenstrasse 22**
**10117 Berlin (DE)**

(56) Entgegenhaltungen:
| | |
|---|---|
| **EP-A1- 1 385 023** | **WO-A1-2008/089992** |
| **US-A1- 2006 228 073** | **US-A1- 2010 171 922** |
| **US-A1- 2012 002 294** | **US-A1- 2014 293 434** |

**Beschreibung**

Die vorliegende Erfindung betrifft eine Abbildungsoptik zum Erzeugen eines virtuellen Bildes sowie eine Datenbrille mit einer derartigen optischen Vorrichtung.

Eine Datenbrille ist eine spezielle Form eines Head Mounted Displays. Eine gängige Form von Head Mounted Displays verwendet Bildschirme, die vor den Augen getragen werden und dem Benutzer computergenerierte Bilder oder von Kameras aufgenommene Bilder präsentieren. Derartige Head Mounted Displays sind häufig voluminös und erlauben keine unmittelbare Wahrnehmung der Umgebung. Erst in jüngerer Zeit sind Head Mounted Displays entwickelt worden, die in der Lage sind, dem Benutzer ein mit einer Kamera aufgenommenes Bild oder ein computergeneriertes Bild darzubieten, ohne die unmittelbare Wahrnehmung der Umgebung zu verhindern. Derartige Head Mounted Displays, die nachfolgend Datenbrillen genannt werden, ermöglichen die Nutzung dieser Technologie im alltäglichen Leben.

Datenbrillen können auf verschiedene Arten bereitgestellt werden. Eine Art der Datenbrille, die sich insbesondere durch ihre Kompaktheit und ästhetische Akzeptanz auszeichnet, beruht auf dem Prinzip der Wellenleitung im Brillenglas. Dabei wird von einem Bildgeber generiertes Licht außerhalb des Brillenglases kollimiert und über die Stirnfläche des Brillenglases eingekoppelt, von wo aus es sich über mehrfache Totalreflexion bis vor das Auge ausbreitet. Ein sich dort befindliches optisches Element koppelt das Licht dann in Richtung der Augenpupille aus. Die Einkopplung in das Brillenglas und die Auskopplung aus dem Brillenglas können dabei entweder diffraktiv, reflektiv oder refraktiv erfolgen. Bei einem diffraktiven Ein- oder Auskoppeln finden als Ein- und Auskopplungselemente Beugungsgitter annähernd gleicher Strichzahl Verwendung, wobei die stark dispersiven Wirkungen der einzelnen Gitter untereinander kompensiert werden. Auf Beugungsgittern beruhende Ein- und Auskoppelelemente sind beispielsweise in US 2006/0126181 A1 und in US 2010/0220295 A1 beschrieben. Ein Lichtleiter für ein Head-Mounted Display mit einem Auskoppelgitter ist zudem in EP 1 385 023 A1 beschrieben. Beispiele für Datenbrillen mit reflektiven oder refraktiven Ein- oder Auskoppelelementen sind in US 2012/0002294 A1 beschrieben. Die US 2006/0228073 A1 und die US 2014/0293434 A1 beschreiben Wellenleiter für Abbildungsvorrichtungen, bei denen die Einkopplung des zu leitenden Lichtes mit Hilfe von Prismen mit gekrümmten Prismenflächen erfolgt.

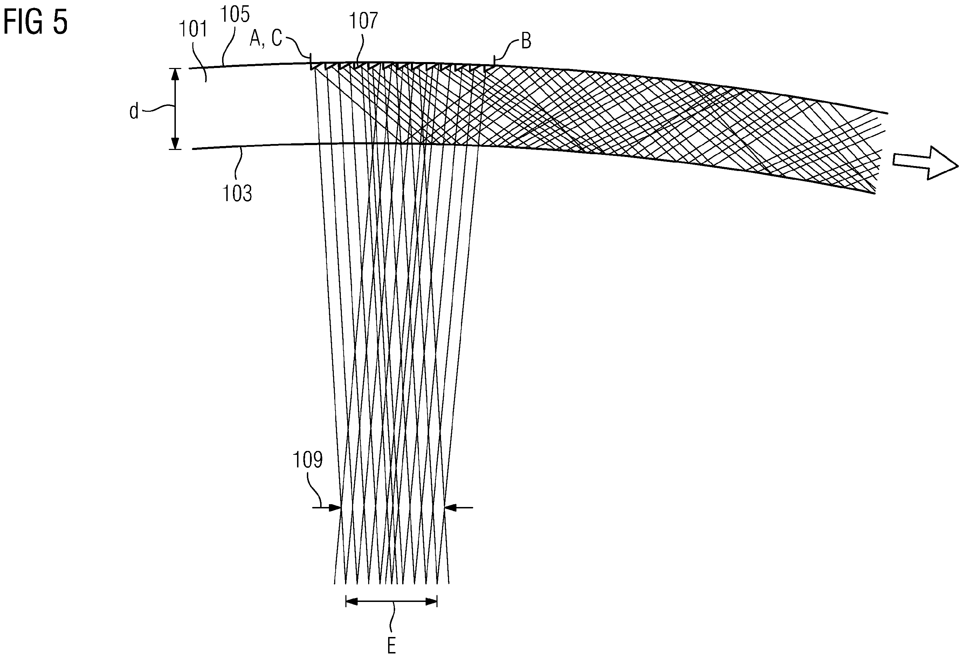

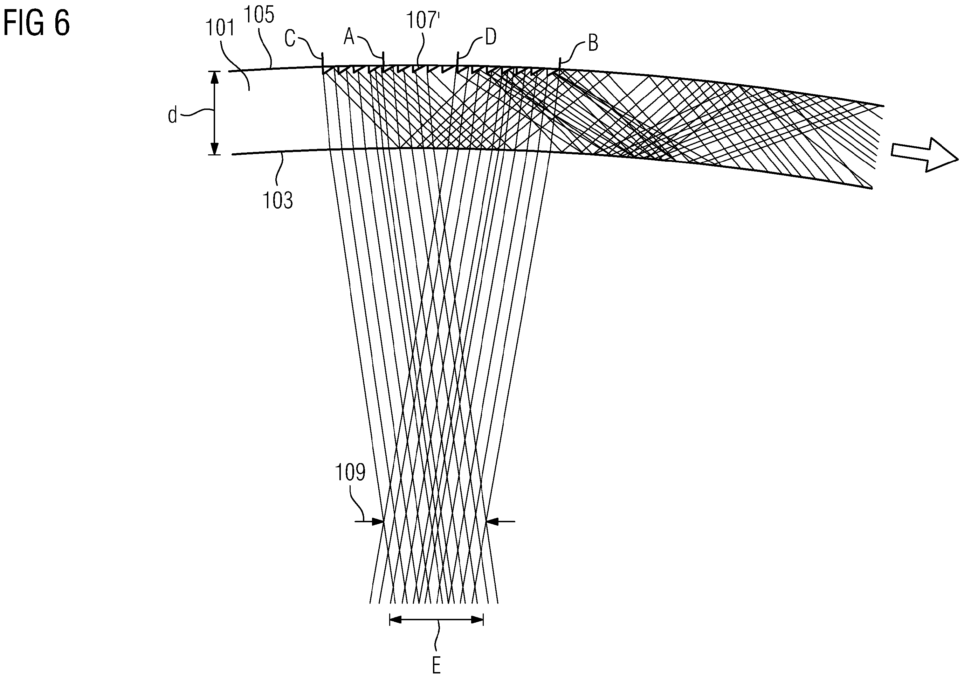

Datenbrillen, bei denen ein Abbildungsstrahlenbündel unter mehrfacher Reflexion von einem Einkoppelelement zu einem Auskoppelelement geleitet wird, haben unabhängig davon, ob als Ein- und Auskoppelelemente diffraktive, reflektive oder refraktive Elemente Verwendung finden, die Problematik des sogenannten "Footprint Overlap" gemeinsam. Diese Problematik, die die Größe des Sichtfeldes (FOV field of view) sowie die Größe der Austrittspupille der Datenbrille am Ort der Eyebox begrenzt und aufgrund deren eine relativ hohe Brillenglasdicke notwendig ist, wird nachfolgend anhand der Figuren 5 und 6 näher erläutert.

Die Eyebox ist derjenige dreidimensionale Bereich der Lichtröhre im Abbildungsstrahlengang, in dem sich die Augenpupille bewegen kann, ohne dass eine Vignettierung des Bildes erfolgt. Da bei einer Datenbrille der Abstand des Auges in Bezug auf die Datenbrille im Wesentlichen konstant ist, kann die Eyebox auf eine zweidimensionale Eyebox, welche lediglich die Drehbewegungen des Auges berücksichtigt, reduziert werden. In diesem Fall entspricht die Eyebox im Wesentlichen der Austrittspupille der Datenbrille am Ort der Eintrittspupille des Auges. Letztere ist in der Regel durch die Augenpupille gegeben. Obwohl es sich bei einer Datenbrille um ein System handelt, mit dem ein Abbildungsstrahlengang vom Bildgeber zur Austrittspupille der Datenbrille verläuft, ist es zum Verständnis des "Footprint Overlap" hilfreich, den Strahlengang in umgekehrter Richtung, also von der Austrittspupille zum Bildgeber, zu betrachten. Es wird daher bei den nachfolgenden Darlegungen eine von der Ausgangspupille der Datenbrille, ausgehende Lichtröhre betrachtet, wobei die Grenzen der Lichtröhre durch die Sichtfeldwinkel der sich von jedem Punkt der Eyebox in Richtung auf das Brillenglas ausbreitenden Strahlenbündel bestimmt ist.

Nach Brechung an der Innenfläche 103 des Brillenglases 101 treffen die Strahlen in der Lichtröhre auf die Außenfläche 105 des Brillenglases 101 auf. In dieser befindet sich die Auskopplungsstruktur 107, welche sich in horizontaler Richtung von Punkt B zum Punkt C erstreckt. Der Abstand zwischen den Punkten B und C wird durch die gewünschte Ausdehnung der Lichtröhre bestimmt, die wiederum von der gewünschten Größe der Eyebox 109 und dem gewünschten Sichtfeldwinkel abhängt. Der Sichtfeldwinkel ist hier in erster Linie der horizontale Sichtfeldwinkel, welcher denjenigen Winkel bezogen auf die Sehachse betrifft, unter dem die horizontalen Randpunkte des Bildfeldes in die Pupille einfallen. Die Sehachse bezeichnet dabei eine gerade Linie zwischen der Fovea des Auges (Punkt des schärfsten Sehens der Netzhaut) und dem Mittelpunkt des Bildfeldes. In Figur 5 ist der Verlauf der Lichtröhre bei einem Eye-Box-Durchmesser E und einer Dicke d des Brillenglases 101 für einen relativ kleinen Sichtfeldwinkel dargestellt. Alle Strahlen der Lichtröhre werden aus der Auskopplungsstruktur 107 in Richtung der Innenfläche 103 des Brillenglases 101 gebeugt oder reflektiert und von dort an die Außenfläche 105 des Brillenglases 101 zurückreflektiert, von wo aus sie wieder auf die Innenfläche 103 des Brillenglases 101 zurückreflektiert werden. Diese Hin-und-Her-Reflexion geschieht solange, bis das Einkoppelelement erreicht ist, von wo aus die Lichtröhre dann in Richtung auf den Bildgeber weiter verläuft.

Wenn, wie in Figur 5 dargestellt, der Sichtfeldwinkel relativ gering ist, treffen die Strahlen der Lichtröhre nach der ersten Reflexion an der Innenfläche 103 des Brillenglases 101 auf einen Bereich der Außenfläche 105 des Brillenglases 1, der außerhalb des Auskopplungselementes 107 liegt (in Fig. 5 rechts neben dem Punkt B). Wenn dagegen ein großer Sichtfeldwinkel gewünscht ist, wie dies in Figur 6 dargestellt ist, ist eine entsprechend vergrößerte Auskopplungsstruktur 107' notwendig. Dies führt jedoch dazu, dass Strahlen der Lichtröhre, die auf den zwischen den Punkten A und C gelegenen Abschnitt der Auskopplungsstruktur 107' auftreffen, nach der ersten Reflexion an der Innenfläche 103 des Brillenglases 101 auf einen Bereich der Außenfläche 105 des Brillenglases 101 zurückreflektiert werden, in dem sich noch die Auskopplungsstruktur 107' befindet. Dieser Bereich, im folgenden Überlappbereich genannt, befindet sich in Figur 6 zwischen den Punkten B und D. Aufgrund des Vorhandenseins des Auskopplungselementes, welches bei der in Figur 6 gewählten Darstellung ein diffraktives oder reflektives Auskopplungselement sein kann, werden die von der Innenfläche 103 des Brillenglases 101 in den Bereich zwischen B und D reflektierten Strahlen nicht in Richtung auf die Innenfläche 103 zurückreflektiert, so dass diese für die Abbildung verloren gehen.

Eine ähnliche Problematik tritt auch auf, wenn nicht der Sichtfeldwinkel vergrößert wird, sondern der Durchmesser der Eyebox. Auch in diesem Fall würde es Punkte A und C geben, zwischen denen sich ein Bereich befindet, der Strahlen in Richtung auf die Innenfläche 103 des Brillenglases 101 reflektiert, die von dort wiederum in einen durch die Punkte B und D gekennzeichneten Bereich der Auskopplungsstruktur 107' zurückreflektiert werden und daher für die Abbildung unbrauchbar sind. Entsprechendes würde auch gelten, wenn der Eye-Box-Durchmesser E und der Sichtfeldwinkel beibehalten würden und dafür die Dicke d des Brillenglases verringert würde. Mit anderen Worten, ein hinreichend großer Eye-Box-Durchmesser E bei einem hinreichend großen Sichtfeldwinkel kann nur mit einer gewissen Mindestdicke d des Brillenglases erreicht werden.

Es sei an dieser Stelle noch einmal darauf hingewiesen, dass für die obige Betrachtung der Strahlengang umgekehrt worden ist, und dass der tatsächliche Strahlengang vom Bildgeber in die Austrittspupille der Datenbrille verläuft. An der grundsätzlichen Betrachtung ändert dies jedoch nichts, da vom Bildgeber kommende Strahlen, die im Bereich zwischen den Punkten B und D auf die Auskopplungsstruktur 107' auftreffen, nicht in die Austrittspupille reflektiert werden, da sie nicht in Richtung auf die Innenfläche des Brillenglases zurückreflektiert werden, was jedoch nötig wäre, um den Bereich der Auskopplungsstruktur 107' zwischen den Punkten A und C zu erreichen, von wo aus sie in Richtung auf die Austrittspupille ausgekoppelt werden könnten.

Im Lichte des beschriebenen Standes der Technik ist es eine erste Aufgabe der vorliegenden Erfindung, eine optische Vorrichtung für eine Datenbrille zur Verfügung zu stellen, mit der die beschriebene Problematik des "Footprint Overlap" verringert werden kann. Daneben ist es eine zweite Aufgabe der vorliegenden Erfindung, eine vorteilhafte Datenbrille zur Verfügung zu stellen.

Die erste Aufgabe wird durch eine Abbildungsoptik nach Anspruch 1 gelöst, die zweite Aufgabe durch eine Datenbrille nach Anspruch 13. Die abhängigen Ansprüche enthalten vorteilhafte Ausgestaltungen der Erfindung.

Eine erfindungsgemäße Abbildungsoptik zum Erzeugen eines virtuellen Bildes von einem auf einem Bildgeber dargestellten Ausgangsbild umfasst:

- wenigstens ein vor dem Auge zu tragendes Brillenglas, welches eine dem Auge zuzuwendende Innenfläche und eine vom Auge abzuwendende Außenfläche aufweist,

- eine Einkopplungseinrichtung zum Einkoppeln eines vom Ausgangsbild ausgehenden Abbildungsstrahlengangs zwischen die Innenfläche und die Außenfläche des Brillenglases, und

- eine in dem Brillenglas vorhandene Fresnelstruktur zum Auskoppeln des Abbildungsstrahlengangs aus dem Brillenglas in Richtung auf das Auge.

Die Einkopplungseinrichtung koppelt den Abbildungsstrahlengang derart zwischen die Innenfläche und die Außenfläche des Brillenglases ein, dass er durch Reflexionen zwischen der Innenfläche und der Außenfläche zur Fresnelstruktur geleitet wird. Die Reflexion kann dabei eine innere Totalreflexion sein oder eine Reflexion an einer reflektierenden Schicht des Brillenglases. Außerdem weist die Fresnelstruktur Fresnelflächen auf, die eine Basisablenkung der Strahlen des Abbildungsstrahlengangs um 45 bis 55 Grad herbeiführen. Unter dem Begriff "Basisablenkung" ist hierbei die Gesamtablenkung eines Nullstrahls zu verstehen, wobei ein Nullstahl ein Strahl ist, der für den im Bogenmaß die Näherung $\sin \alpha \approx \tan \alpha \approx \alpha$, wobei a seinen Winkel zur optischen Achse bezeichnet, gilt. Nullstrahlen sind somit Strahlen, für die die paraxiale Näherung gilt.

In der erfindungsgemäßen Abbildungsoptik ist die Basisablenkung der Strahlen des Abbildungsstrahlengangs durch die Fresnelstruktur derart abgestimmt, dass einerseits der Footprint Overlap gering gehalten wird und andererseits Abschattungseffekte und Abbildungsfehler gering gehalten werden können. Beispielsweise würden bei größeren Basisablenkungen als 55 Grad Abschattungseffekte an der Fresnelstruktur so groß werden, dass sie die Abbildung stören würden. Darüber hinaus würde bei einer Überschreitung des Winkels von 55 Grad auch die Neigung zu Abbildungsfehlern verstärkt werden. Bei geringeren Ablenkungen als 45 Grad würde sich dagegen der Footprint Overlap deutlich verstärken und die Abbildung stark störend beeinflussen.

Im Rahmen der erfindungsgemäßen Abbildungsoptik besitzt das Brillenglas einen Krümmungsradius zwischen 100 mm und 150 mm, insbesondere zwischen 120 und 140 mm. Krümmungsradien in diesem Bereich sind einerseits angenehm und andererseits im Hinblick auf die Abbildungsqualität der Abbildungsoptik vertretbar. Andere Krümmungsradien würden entweder zu Lasten der Ergonomie oder zu Lasten der Abbildungsqualität gehen. Es sei an dieser Stelle angemerkt, dass die Krümmungsradien der Außenfläche und der Innenfläche des Brillenglases im Wesentlichen gleich sind, das heißt eine Abweichung von weniger als 1 % voneinander aufweisen, wenn mit dem Brillenglas keine Fehlsichtigkeit korrigiert werden soll. Falls mit dem Brillenglas gleichzeitig eine Fehlsichtigkeit zu korrigieren ist, können größere Abweichungen zwischen den Krümmungsradien der Außenfläche und der Innenfläche auftreten.

Im Rahmen der erfindungsgemäßen Abbildungsoptik ist vorteilhaft, wenn die Einkopplungseinrichtung den Abbildungsstrahlengang derart zwischen die Innenfläche und die Außenfläche des Brillenglases einkoppelt, dass der Abbildungsstrahlengang über vier Reflexionen zur Fresnelstruktur geleitet wird. Bei weniger als vier Reflexionen wäre es schwierig, an der Fresnelstruktur eine maximale Basisablenkung der Strahlen des Abbildungsstrahlengangs von 55 Grad einzuhalten, und bei mehr als vier Reflexionen müssten die Auftreffwinkel auf die Brillenglasfläche stark reduziert werden, da sonst der Bildgeber zu weit vom Kopf des Trägers der mit der Abbildungsoptik versehenen Datenbrille entfernt angeordnet werden müsste, was aus ästhetischen und praktischen Gründen unerwünscht ist.

In der erfindungsgemäßen optischen Vorrichtung ist im Brillenglas zwischen der Einkopplungseinrichtung und der Fresnelstruktur eine Randverdickung vorhanden, in der die Dicke des Brillenglases größer als im Bereich der Fresnelstruktur ist. Die Randverdickung an der angegebenen Stelle des Brillenglases dient dazu, selbst bei einem relativ dünnen Brillenglas den Footprint Overlap zu verringern. Die Verdickung des Brillenglases im Bereich der Randverdickung ist dabei weniger störend, als wenn das gesamte Brillenglas verdickt würde. Die Einkopplungseinrichtung koppelt den Abbildungsstrahlengang derart zwischen die Innenfläche und die Außenfläche des Brillenglases ein, dass die erste Reflexion nach dem Einkoppeln an der Außenfläche des Brillenglases erfolgt und die zweite Reflexion nach dem Einkoppeln im Bereich der Randverdickung an einer an der Innenseite des Brillenglases angeordneten Reflexionsfläche erfolgt. Wenn die Randverdickung im Bereich einer dritten oder vierten Reflexion vorhanden wäre, würde sie die Sicht durch die Brille erheblich beeinflussen, da sie sich dann bei aufgesetzter Brille näher am Zentrum des Sehfeldes befinden würde. Andererseits ermöglicht die Randverdickung bei einer Basisablenkung der Strahlen des Abbildungsstrahlengangs an der Fresnelstruktur um 45 bis 55 Grad das Verringern des Footprint Overlaps, so dass auf die Randverdickung nicht vollständig verzichtet werden sollte. Die Lage im Bereich der zweiten Reflexion, das heißt der ersten Reflexion an der Innenfläche des Brillenglases, stellt somit einen Kompromiss dar, der einerseits ein Verringern des Footprint Overlap ermöglicht und andererseits die Sicht durch das Brillenglas lediglich am Rande des Sehfelds des Trägers einer mit der erfindungsgemäßen Abbildungsoptik versehenen Datenbrille beeinträchtigt, so dass die sich aus der Randverdickung eventuell ergebende Sichtbeeinträchtigung nicht oder nur wenig störend ist.

In der erfindungsgemäßen Abbildungsoptik ist es außerdem vorteilhaft, wenn die Fresnelstruktur eine Brennweite von mindestens 80 mm aufweist, so dass sie nicht oder kaum zu der die Abbildung formenden Brechkraft beiträgt. Mit anderen Worten, die Fresnelflächen haben in der erfindungsgemäßen Abbildungsoptik eine vorwiegend umlenkende Funktion. Der Hauptteil der für die Abbildung benötigten Brechkraft kann dann von einer in die Einkopplungseinrichtung integrierten Kollimationsoptik zur Kollimation des Abbildungsstrahlengangs bereitgestellt werden. Hierzu kann die Einkopplungseinrichtung beispielsweise eine Eintrittsfläche sowie eine erste Spiegelfläche und eine zweite Spiegelfläche umfassen. Eine oder mehrere dieser Flächen bildet bzw. bilden dann die Kollimationsoptik. Insbesondere können auch die Eintrittsfläche, die erste Spiegelfläche und die zweite Spiegelfläche zusammen die Kollimationsoptik bilden. Wenn die Fresnelstruktur eine Brennweite von 80 mm oder mehr aufweist, also die zum Erzeugen des virtuellen Bildes benötigte Brechkraft im Wesentlichen von der Kollimationsoptik zur Verfügung gestellt wird, ist es vorteilhaft, wenn die Kollimationsoptik eine Brennweite im Bereich zwischen 20 und 30 mm aufweist. In diesem Fall kann dem Benutzer einer mit einer erfindungsgemäßen Abbildungsoptik ausgestatten Datenbrille der Eindruck vermittelt werden, die mit dem virtuellen Bild dargestellte Szene befinde sich in einem Abstand von wenigen Metern vor dem Auge.

Durch die Segmentierung der Fresnelstruktur bei gleichzeitiger Nähe zur Pupille werden im Abbildungsstrahlengang auftretende Abbildungsfehler ungünstig beeinflusst, wenn die Fresnelfläche mit einer zu hohen Brechkraft versehen wird. Dieser Effekt ist umso stärker, je tiefer die Fresnelflächen gewählt werden. Eine gewisse Mindesttiefe ist aber notwendig, um die zueinander inkohärenten Fresnelflächen mit einer hinreichend großen Apertur zu versehen. Als günstiger Kompromiss haben sich Fresnelzonentiefen für die Fresnelflächen zwischen 0,35 und 0,5 mm erwiesen. Mit anderen Worten, die Stufen zwischen den einzelnen Fresnelflächen weisen Höhen zwischen 0,35 und 0,5 mm auf.

In der erfindungsgemäßen Abbildungsoptik kann die im Bereich der Randverdickung an der Innenfläche des Brillenglases angeordnete Reflexionsfläche eine Abbildungsfehler zumindest teilweise korrigierende Freiformfläche sein. Unter einer Freiformfläche soll dabei eine ebene, sphärische, elliptische oder hyperbolische Fläche verstanden werden, der eine durch ein Polynom in x- und y-Richtung definierte Fläche überlagert ist, wobei die x-Richtung und die y-Richtung in einer Ebene definiert sind, auf der die optische Achse, welche in z-Richtung verläuft, senkrecht steht. Zusätzlich oder alternativ zu der von der Innenseite des Brillenglases im Bereich der Randverdickung gebildeten Freiformfläche kann bzw. können die erste Spiegelfläche der Einkopplungseinrichtung eine Abbildungsfehler zumindest teilweise korrigierende Freiformfläche bilden und/oder die zweite Spiegelfläche der Einkopplungseinrichtung eine Abbildungsfehler zumindest teilweise korrigierende Freiformfläche bilden und/oder die Eintrittsfläche der Einkopplungseinrichtung eine Abbildungsfehler zumindest teilweise korrigierende Freiformfläche bilden. Das Ausgestalten der Innenseite des Brillenglases im Bereich der Randverdickung als eine Abbildungsfehler zumindest teilweise korrigierende Freiformfläche hat dabei den Vorteil, dass im Vergleich zu den übrigen genannten Flächen noch relativ pupillennah in die Abbildungsqualität eingegriffen werden kann. Insgesamt ist es jedoch vorteilhaft, wenn mehrere Freiformflächen vorliegen, da dann auch auf mehrere Abbildungsfehler gleichzeitig getrennt eingewirkt werden kann.

In einer vorteilhaften Ausgestaltung der erfindungsgemäßen Abbildungsoptik sind die Innenseite des Brillenglases im Bereich der Randverdickung, die erste Spiegelfläche der Einkopplungseinrichtung, die zweite Spiegelfläche der Einkopplungseinrichtung sowie die Eintrittsfläche der Einkopplungseinrichtung jeweils als Kegelschnittflächen ausgebildet, denen eine Freiformfläche überlagert ist. Auf diese Weise können die genannten Flächen außer zur Korrektur von Abbildungsfehlern auch zur Bereitstellung von Brechkraft herangezogen werden.

Es ist vorteilhaft, wenn das Brillenglas und die Einkopplungseinrichtung der erfindungsgemäßen Abbildungsoptik eine Einheit, insbesondere eine monolithische Einheit bilden, das heißt dass außer der Eingangsfläche der Einkopplungseinrichtung, an der der Abbildungsstrahlengang in die Einkopplungseinrichtung eintritt, und der Fläche, an der das Abbildungsstrahlenbündel in Richtung auf das Auge aus dem Brillenglas austritt, keine weitere Grenzflächen mit Glas-Luft-Übergang vorhanden sind. Diese haben meist den Nachteil, dass vor allem beim schrägen Durchgang durch diese Flächen Farbfehler sowie andere Fehler höherer Ordnung auftreten, die nur aufwändig zu korrigieren sind. Außerdem verursachen solche Übergänge hohe Sensitivitäten bezüglich Kipp- und Positionstoleranzen.

Eine erfindungsgemäße Datenbrille ist mit einer erfindungsgemäßen Abbildungsoptik zum Erzeugen eines virtuellen Bildes ausgestattet. Die mit Bezug auf die erfindungsgemäße Abbildungsoptik beschriebenen Eigenschaften und Vorteile sind daher in der erfindungsgemäßen Datenbrille ebenfalls realisiert. Die erfindungsgemäße Datenbrille weist somit einen geringen Footprint Overlap und gleichzeitig geringe Abschattungseffekte auf. Außerdem können mit Hilfe der erwähnten Freiformflächen Abbildungsfehler im Abbildungsstrahlengang korrigiert werden, so dass die erfindungsgemäße Datenbrille mit lediglich geringen Abbildungsfehlern realisiert werden kann.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Figur 1    zeigt eine Datenbrille in einer perspektivischen Darstellung.

Figur 2    zeigt ein Brillenglas und eine Einkopplungsvorrichtung der Datenbrille aus Figur 1 in einer schematischen Darstellung.

Figur 3    zeigt das Brillenglas und die Einkopplungsvorrichtung in einer perspektivischen Darstellung.

Figur 4    zeigt eine Fresnelstruktur, wie sie in der in Figur 1 gezeigten Datenbrille Verwendung findet.

Figur 5    zeigt einen Ausschnitt aus einem Abbildungsstrahlengang in einer Datenbrille nach Stand der Technik mit einem kleinen Sichtfeldwinkel.

Figur 6    zeigt einen Ausschnitt aus einem Abbildungsstrahlengang in einer Datenbrille nach Stand der Technik mit einem großen Sichtfeldwinkel.

Nachfolgend wir die erfindungsgemäße Abbildungsoptik am Beispiel einer mit einer solchen Abbildungsoptik ausgestatteten Datenbrille beschrieben.

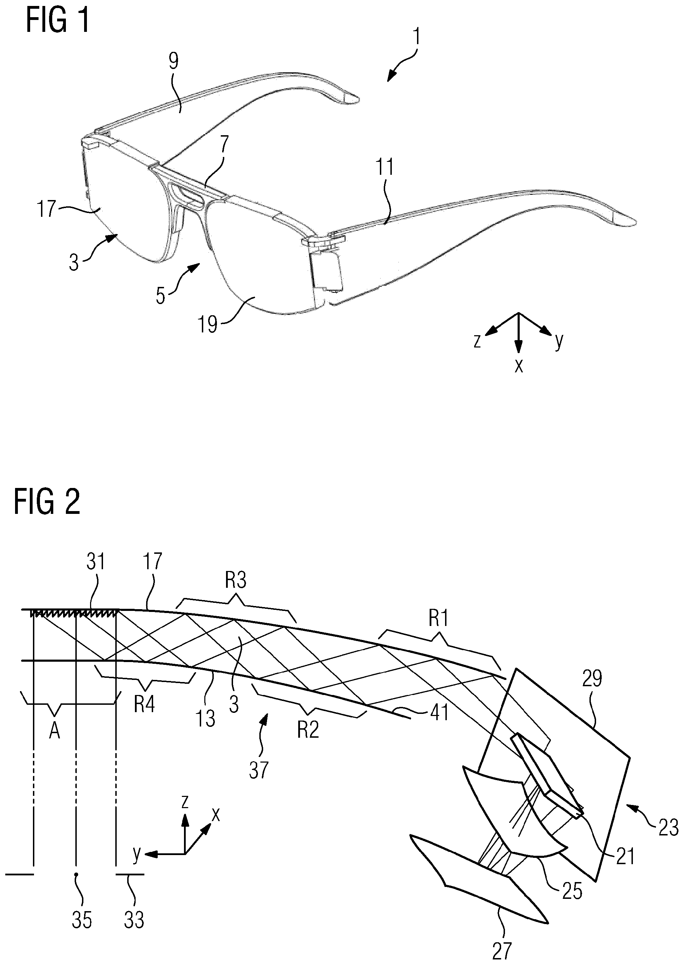

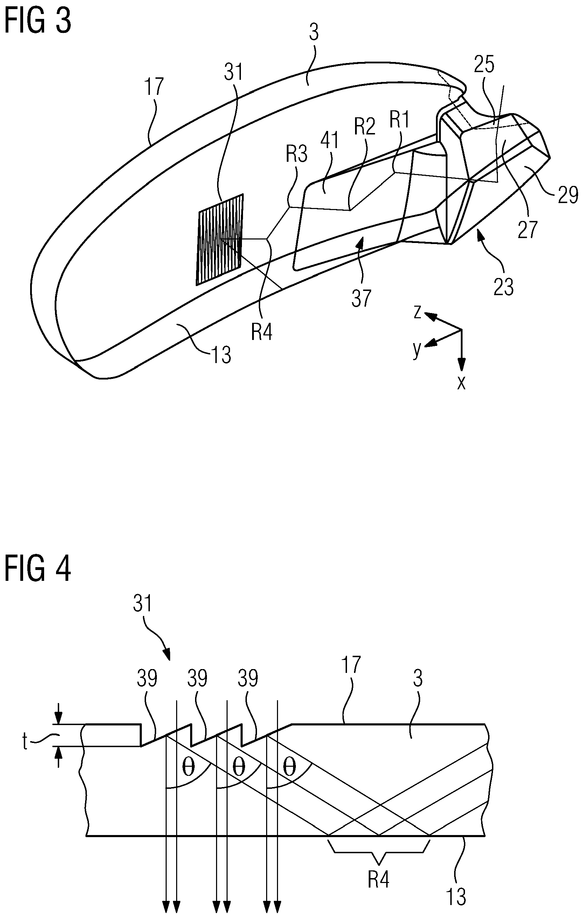

Eine mit einer erfindungsgemäßen Abbildungsoptik ausgestattete Datenbrille 1 ist in Figur 1 gezeigt. Die Abbildungsoptik selbst, die ein Brillenglas 3 und eine Einkopplungsvorrichtung 23 umfasst, ist in Figuren 2 und 3 gezeigt, wobei Figur 2 die Abbildungsoptik in einer schematischen Darstellung zum Erläutern ihrer Funktionsweise zeigt und Figur 3 eine typische Ausgestaltung der Abbildungsoptik in einer perspektivischen Darstellung zeigt.

Die Datenbrille 1 umfasst zwei Brillengläser 3, 5, die von einem Brillengestell 7 mit zwei Brillenbügeln 9, 11 gehalten werden. Die Gläser weisen jeweils eine bei aufgesetzter Brille zum Auge des Benutzers weisende Innenfläche 13, 15 (in den Figuren 2 und 3 zu sehen) und eine vom Auge des Benutzers weg weisende Außenfläche 17, 19 (in den Figuren 1 und 2 zu sehen) auf. Im vorliegenden Ausführungsbeispiel befindet sich im Brillenbügel 9 oder zwischen dem Brillenbügel 9 und dem Brillenglas 17 ein Bildgeber 21 (in Figur 2 gezeigt), der beispielsweise als Flüssigkristallanzeige (LCD-Display), als auf Leuchtdioden basierendes Display (LED-Display) oder als auf organischen Leuchtdioden basierendes Display (OLED-Display) ausgebildet sein kann. Zwischen dem Bildgeber 21 und dem Brillenglas 3 ist eine Einkopplungseinrichtung 23 angeordnet, die im vorliegenden Ausführungsbeispiel eine Eintrittsfläche 25, eine erste Spiegelfläche 27 und eine zweite Spiegelfläche 29 aufweist und als Block aus Glas oder transparentem Kunststoff ausgebildet ist, wobei die Eintrittsfläche 25 und die Spiegelflächen 27, 29 durch Flächen des Blocks gebildet sind (siehe Figur 3). Wie der die Einkopplungsvorrichtung 23 bildende Block kann auch das Brillenglas 3 aus Glas oder transparentem Kunststoff hergestellt sein.

Im vorliegenden Ausführungsbeispiel sind der die Einkopplungsvorrichtung 23 bildende Block und das Brillenglas 3 monolithisch ausgebildet, das heißt zwischen dem Block und dem Brillenglas 3 ist keine Grenzfläche und somit kein Luftspalt vorhanden. Insbesondere beim schrägen Durchgang durch an Luft grenzende Flächen des Brillenglases oder des Blocks würden Farbfehler sowie andere Fehler höherer Ordnung auftreten, die durch die Ausbildung ohne Luftspalt vermieden werden können. Für derartige Farbfehler oder Fehler höherer Ordnung wären aufwändige Korrekturmittel notwendig. Außerdem würden Luftspalte hohe Sensitivitäten auf Kipp- und Positionstoleranzen aufweisen, die durch die monolithische Ausgestaltung des die Einkopplungsvorrichtung bildenden Blocks und des Brillenglas ebenfalls vermieden werden können. Die beschriebene monolithische Ausgestaltung von Block und Brillenglas 3 ist jedoch nicht zwingend nötig. Ein Luftspalt zwischen Block und Brillenglas 3 kann auch vermieden werden, wenn der Block und das Brillenglas 3 als getrennte Einheiten geformt und anschließend miteinander verkittet werden. Falls der die Einkopplungsvorrichtung 23 bildende Block und das Brillenglas 3 aus zwei miteinander verkitteten Einheiten bestehen, können beide selbstverständlich auch aus unterschiedlichen Materialien hergestellt sein. Bevorzugt ist jedoch, den die Einkopplungsvorrichtung 23 bildende Block und das Brillenglas 3 monolithisch, also ohne Grenzfläche zwischen beiden, auszubilden.

Die Einkopplungsvorrichtung 23 dient außer zum Einkoppeln des vom Bildgeber 21 ausgehenden Abbildungsstrahlengangs in das Brillenglas 3 auch zum Kollimieren der von den Bildpunkten des vom Bildgeber 21 dargestellten Ausgangsbildes ausgehenden divergenten Strahlenbündel des Abbildungsstrahlengangs. Hierzu weisen im vorliegenden Ausführungsbeispiel die Eintrittsfläche 25, die erste Spiegelfläche 27 und die zweite Spiegelfläche 29 entsprechend gekrümmte Flächen auf, wobei die Eintrittsfläche 25 als ellipsoide Fläche ausgebildet ist und die beiden Spiegelflächen 27, 29 jeweils als hyperbolische Flächen ausgebildet sind. Diese Krümmungen stellen die Grundkrümmungen dieser Flächen dar. Im vorliegenden Ausführungsbeispiel sind den Grundkrümmungen dieser Flächen 25, 27, 29 Freiformflächen überlagert, die durch Polynome in x und y gegeben sind, wobei x- und y-Koordinaten eines Koordinatensystems darstellen, dessen z-Achse der optischen Achse des Abbildungsstrahlengangs entspricht. Die z-Koordinate der Flächen in der Abbildungsvorrichtung 23 sind dann durch die Summe der durch eine Kegelschnittfläche gegebenen z-Koordinate (Grundkrümmung) und einer durch das Polynom gegebenen z-Koordinate (Freiformfläche) festgelegt. Die Funktion der Freiformflächen wird später erläutert werden.

Das Brillenglas 3 und die Einkopplungsvorrichtung 23 bilden zusammen die Abbildungsoptik der Datenbrille 1, welche ein virtuelles Bild des auf den Bildgeber dargestellten Ausgangsbildes erzeugt.

Von der Einkopplungsvorrichtung 23 wird der mittels der Eintrittsfläche 25 und der beiden Spiegelflächen 27, 29 kollimierte Abbildungsstrahlengang zwischen die Innenfläche 13 und die Außenfläche 17 in das Brillenglas 3 eingekoppelt. Im Brillenglas 3 wird der Abbildungsstrahlengang dann mittels Reflexionen an der Außenfläche 17 und der Innenfläche 13 des Brillenglases 3 zu einer Fresnelstruktur 31 geleitet, von der der kollimierte Abbildungsstrahlengang ausgekoppelt wird, indem er derart in Richtung auf die Innenfläche 17 des Brillenglases 3 abgelenkt wird, dass er durch diese refraktiv in Richtung auf die Austrittspupille 33 der Abbildungsoptik aus dem Brillenglas 3 austritt. Die Austrittspupille 33 befindet sich bei aufgesetzter Datenbrille 1 am Ort der Pupille des Nutzerauges, von dem in Fig. 2 der Augendrehpunkt 35 dargestellt ist.

Eine Fresnelstruktur 31, wie sie in der Abbildungsoptik der Datenbrille 1 Verwendung finden kann, ist in Fig. 4 beschrieben. Die gezeigte Fresnelstruktur 31 weist Facetten 39 auf, die im vorliegenden Ausführungsbeispiel so orientiert sind, dass ein auf die Facette 39 auftreffender Nullstrahl des Abbildungsstrahlengangs in Richtung auf die Innenfläche 17 des Brillenglases 3 reflektiert wird und der reflektierte Nullstrahl mit dem auftreffenden Nullstrahl einen Winkel $\theta = 50$ Grad einschließt. Im vorliegenden Ausführungsbeispiel sind die Facetten 39 teilverspiegelt, so dass aus der Umgebung stammende Strahlenbündel die teilverspiegelten Facetten 39 in Richtung auf die Austrittspupille 33 passieren können. Auf diese Weise liegt im Bereich der Austrittspupille 33 ein Strahlengang vor, in dem der Abbildungsstrahlengang mit einem aus der Umgebung stammenden Strahlengang überlagert ist, so dass bei einem Nutzer einer mit der Abbildungsoptik versehenen Datenbrille 1 der Eindruck entsteht, das virtuelle Bild schwebe in der Umgebung.

Auf dem Weg zur Fresnelstruktur 31 erfolgen im Brillenglas 3 nach dem Einkoppeln des Abbildungsstrahlengangs vier Reflexionen, von denen die erste R1 an der Außenfläche 17 des Brillenglases 3 erfolgt, die zweite Reflexion R2 an der Innenfläche 13 des Brillenglases 3 erfolgt, die dritte Reflexion R3 wiederum an der Außenfläche 17 des Brillenglases 3 erfolgt und die vierte Reflexion R4 schließlich wieder an der Innenfläche 13 des Brillenglases 3 erfolgt. Die Fresnelstruktur 31 befindet sich in der Außenfläche des Brillenglases, wohin der Abbildungsstrahlengang von der vierten Reflexion R4 reflektiert wird. Mittels der Fresnelstruktur 31 wird der Abbildungsstrahlengang dann wie beschrieben in Richtung auf die Austrittspupille der Abbildungsoptik aus dem Brillenglas 3 ausgekoppelt. In Fig. 3 sind ein Mittelstrahl und zwei Randstrahlen eines vom Bildgeber 21 ausgehenden divergenten Strahlenbündels gezeigt. Durch die Kollimation mittels der eine Kollimationsoptik bildenden Einkopplungsvorrichtung 23 liegt im Brillenglas 23 ein weitgehend kollimierter Strahlengang vor, der dann als weitgehend kollimierter Strahlengang von der Fresnelstruktur 31 ausgekoppelt wird.

Dort, wo die zweite Reflexion R2 an der Innenfläche 13 des Brillenglases 3 stattfindet, ist das Brillenglas 3 mit einer Randverdickung 37 versehen, das heißt in diesem Bereich ist der Abstand zwischen der Innenfläche 13 und der Außenfläche 17 größer als in den übrigen Bereichen des Brillenglases 3, wo der Abstand zwischen der Innenfläche 13 und der Außenfläche 17 im Wesentlichen konstant ist, sofern das Brillenglas 3 nicht zur Korrektur einer Fehlsichtigkeit ausgebildet ist. Sollte das Brillenglas 3 hingegen eine Form aufweisen, die eine Fehlsichtigkeit korrigiert, so kann das Brillenglas im Bereich der Randverdickung 37 dicker sein, als dies zur Korrektur der Fehlsichtigkeit nötig wäre. Um die Beeinträchtigung der Sicht durch die Randverdickung 37 so gering wie möglich zu halten, befindet sich die Randverdickung in einem Randbereich des Brillenglases, also in einem Bereich, der einem großen Sehwinkel entspricht und daher am Rand des Sichtfeldes eines Nutzers liegt, wo er wenn überhaupt nur wenig störend ist. Die Randverdickung 37 ermöglicht im Vergleich zu einem Brillenglas 3 ohne Randverdickung 37 einen geringeren Footprint Overlap, was wiederum ein größeres Sichtfeld (FOV, field of view) sowie eine größere Eyebox ermöglicht, ohne dass das Brillengalas als Ganzes dicker gestaltet werden muss. Außerdem ermöglicht es die Randverdickung 37, relativ pupillennah in die Abbildungsqualität einzugreifen, weshalb die Radverdickung 37 im vorliegenden Ausführungsbeispiel eine Freiformfläche 41 aufweist, in der eine durch ein Polynom definierte Freiform der Grundkrümmung der Innenfläche 13 des Brillenglases 3 überlagert ist.

Im vorliegenden Ausführungsbeispiel werden die Reflexionen R1 bis R4 an der Innenfläche 13 und der Außenfläche 17 des Brillenglases durch Totalreflexionen an der Innenfläche 13 und der Außenfläche 17, die jeweils eine Grenzfläche zu Luft, also zu einem optisch dünneren Medium darstellen, realisiert. Sie können grundsätzlich jedoch auch durch reflektierende Beschichtungen auf der Innenfläche 13 und der Außenfläche 17 realisiert sein, was jedoch die Herstellung des Brillenglases aufwändiger gestalten und somit verteuern würde. Grundsätzlich könnten die Reflexionen auch an im Inneren des Brillenglases 3 befindlichen reflektierenden Schichten stattfinden, was jedoch in der Herstellung noch Aufwändiger als das Beschichten der Innen- und Außenfläche des Brillenglases wäre.

Im vorliegenden Ausführungsbeispiel bilden die Kollimationsoptik der Abbildungsvorrichtung 23 und das Brillenglas 3 mit der Fresnelstruktur 31 eine Abbildungskette, die sich in drei Bereiche einteilen lässt. Der erste Bereich ist dabei die Kollimationsoptik der Einkopplungsvorrichtung 23, die eine Brennweite zwischen 20 und 30 mm aufweist und im Wesentlichen die Kollimation des vom Bildgeber 21 ausgehenden Abbildungsstrahlengangs übernimmt.

Der zweite Bereich der Abbildungskette ist durch die als Freiformfläche 41 ausgebildete Reflexionsfläche der Randverdickung 37 des Brillenglases 3 gegeben. Diese Fläche übernimmt durch ihre Freiformauslegung wenigstens einen Teil der Korrektur von Abbildungsfehlern im Abbildungsstrahlengang. Außerdem sorgt die Randverdickung 37 im Bereich der Reflexionsfläche der Randverdickung 37 dafür, dass an den Facetten 39 der Fresnelstruktur 31 der Winkel zwischen einem auf eine Facette 39 auftreffenden Nullstrahl und einem von der Facette 39 reflektierten Nullstrahl nicht kleiner als ca. 45 Grad wird. Winkel kleiner als ca. 45 Grad würden den Footprint Overlap erhöhen.

Der dritte Bereich der Abbildungskette ist die Fresnelstruktur 31 mit ihren Facetten 39. Im vorliegenden Ausführungsbeispiel sind die Facetten 39 mit Freiformflächen ausgebildet, das heißt der Grundfläche der Facetten 39 ist eine Freiformfläche überlagert, die durch ein Polynom in x und y gegeben ist, wobei x- und y-Koordinaten eines Koordinatensystems darstellen, dessen z-Achse der optischen Achse des Abbildungsstrahlengangs am Ort der Facetten 39 entspricht. Die Brennweite der Fresnelstruktur 31 ist betragsmäßig größer als 80 mm, das heißt die Fresnelflächen haben eine überwiegend umlenkende Funktion und praktisch keine kollimierende Funktion. Darüber hinaus dienen die Fresnelflächen durch ihre Freiform auch zur Korrektur von Abbildungsfehlern.

Durch die starke Segmentierung der Fresnelstruktur 31 bei gleichzeitiger Nähe zur Austrittspupille 33 würden bei einer Brennweite von weniger als 80 mm Abbildungsfehler ungünstig beeinflusst werden. Dieser Effekt ist umso stärker, je größer die Tiefe t der Facetten ist. Eine gewisse Mindesttiefe ist jedoch notwendig, um den zueinander inkohärenten Fresnelflächen eine hinreichend große Apertur zu geben. Im vorliegenden Ausführungsbeispiel beträgt die Tiefe t 0,45 mm.

Neben den Freiformflächen der Facetten 39 und der Randverdickung 37 haben im vorliegenden Ausführungsbeispiel auch die Eintrittsfläche 25, die erste Spiegelfläche 27 und die zweite Spiegelfläche 29 der Einkopplungsoptik 23 eine Abbildungsfehler korrigierende Funktion. Hierzu sind diese Flächen wie die Reflexionsfläche 41 im Bereich der Randverdickung und die Facetten 39 der Fresnelstruktur 31 als Freiformflächen ausgebildet.

Nachfolgend wird ein konkretes Ausführungsbeispiel für eine erfindungsgemäße Abbildungsoptik angegeben. In diesem sind die Innenfläche 13 und die Außenfläche 17 des Brillenglases 3 sphärische Flächen, wobei der Krümmungsradius der Innenfläche 13 des Brillenglases 119,4 mm und der Krümmungsradius der Außenfläche 17 des Brillenglases 120,0 mm beträgt. Die Dicke des Brillenglases beträgt außerhalb des Randverdickungsbereichs 4 mm. Das Material des Brillenglases einschließlich der monolithisch mit dem Brillenglas hergestellten Einkopplungsvorrichtung ist im vorliegenden Ausführungsbeispiel Polycarbonat.

In dem konkreten Ausführungsbeispiel ist insbesondere die Form der Freiformflächen explizit angegeben, wobei die Koordinaten der einzelnen Flächen jeweils auf ein lokales Koordinatensystem der entsprechenden Fläche bezogen, dessen Lage und Orientierung sich aus einer Translation und einer Rotation gegenüber dem Koordinatensystem der Austrittspupille 33 (das Koordinatensystem der Austrittspupille ist in Fig. 2 eingezeichnet) ergeben. Die Tabelle 1 zeigt für die Austrittspupille 33, die Auskoppelfläche A an der Innenfläche 13 des Brillenglases 3, die Fresnelstruktur 31, die Außenfläche 17 des Brillenglases 3, die Fläche 41 im Bereich der Randverdickung 37 des Brillenglases 3, die Fläche des Bildgebers 21, die Eintrittsfläche 25 der Einkopplungsvorrichtung, die erste Reflexionsfläche 27 der Einkopplungsvorrichtung und die zweite Reflexionsfläche 29 der Einkopplungsvorrichtung jeweils die Lage und die Orientierung des lokalen Koordinatensystems. Die Translation des jeweiligen lokalen Koordinatensystems gegenüber dem Koordinatensystem der Austrittpupille 33 ist dabei durch die Koordinaten X, Y, Z (in mm) des Ursprungs des lokalen Koordinatensystems im Koordinatensystem der Austrittpupille 33 gegeben. Die Orientierung des jeweiligen lokalen Koordinatensystems im Vergleich zur Orientierung des Koordinatensystems der Austrittpupille 33 ist durch eine Drehung um die Achsen des Koordinatensystems der Austrittpupille 33 definiert, wobei die Drehung des lokalen Koordinatensystems durch eine Drehung um die x-Achse des Koordinatensystems der Austrittpupille 33, eine nachfolgende Drehung um die y-Achse des Koordinatensystems der Austrittpupille 33 und eine abschließende Drehung um die z-Achse des Koordinatensystems der Austrittpupille 33 realisiert ist. Die Tabelle 1 zeigt bezüglich der Drehungen jeweils die Drehwinkel Dx, Dy, Dz um die x-Achse, die y-Achse und die z-Achse des Koordinatensystems der Austrittpupille 33.

Tabelle 1

| Fläche | X | Y | Z | Dx | Dy | Dz |
|---|---|---|---|---|---|---|
| 33 | 0.00 | 0.00 | 0.00 | 0.0000 | 0.0000 | 0.0000 |
| A | 0.00 | 0.00 | 15.83 | 4.4021 | 2.4659 | 0.0000 |
| 31 | -0.14 | 10.21 | 18.43 | 9.0287 | 2.6089 | 1.6685 |
| 17 | -0.15 | 10.24 | 18.62 | 9.0287 | 2.6089 | 1.6685 |
| 37 | -27.74 | 3.56 | 9.82 | -16.7066 | -40.1079 | 3.9576 |
| 29 | -37.047 | -0.26 | 3.94 | 74.1177 | -57.1390 | 85.3575 |
| 27 | -32.65 | 14.56 | 0.08 | 164.5010 | -30.9168 | 162.8878 |
| 25 | -36.21 | 14.73 | 1.16 | -135.2186 | -17.1487 | -166.7386 |
| 21 | -39.12 | 15.28 | 6.33 | -156.5923 | -48.2258 | 131.8230 |

Die Freiformflächen der Fresnelstruktur, der Einkopplungsfläche 25, der ersten Spiegelfläche 27 und der zweiten Spiegelfläche 29 genügen der Formel

$$z = \frac{cr^2}{1 + \sqrt{1 - (1+k)c^2 r^2}} + \sum_{j=2}^{66} C_j x^m y^n \qquad j = \frac{(m+n)^2 + m + 3n}{2} + 1$$

wobei z die Koordinate der jeweiligen Fläche in z-Richtung des lokalen Koordinatensystems angibt, x und y die Koordinaten in x- und y-Richtung des lokalen Koordinatensystems angeben, wobei $r^2 = x^2 + y^2$ gilt und k die sogenannte konische Konstante, c die Krümmung im Scheitel der Fläche, $C_j$ den Koeffizienten des j-ten Polynomglieds und m und n ganze Zahlen darstellen. Während der erste Summand der Formel eine Kegelschnittfläche beschreibt, beschreibt der zweite Summand die der Kegelschnittfläche überlagerte Freiform. In der nachfolgenden Tabelle 2 sind die konischen Konstanten für die Freiformfläche 41 der Randverdickung 37, die Eintrittsfläche 25 der Einkopplungsvorrichtung 23, die erste Spiegelfläche 27 der Einkopplungsvorrichtung 23 und die zweite Spiegelfläche 29 der Einkopplungsvorrichtung 23 angegeben. Die Koeffizienten $C_j$ sind in Tabelle 3 angegeben. Die Tabelle 3 enthält außerdem den Index j und die Werte für die den Index j ergebenden ganzen Zahlen m und n.

Tabelle 2

| Fläche (Bezugsziffer) | konische Konstante k |
|---|---|
| 41 | 0.000000e+000 |
| 29 | -1.330999e+001 |
| 27 | -4.140479e+001 |
| 25 | 7.034078e+000 |

Tabelle 3

| m | n | j | Fläche 41 | Fläche 29 | Fläche 27 | Fläche 25 |
|---|---|---|-----------|-----------|-----------|-----------|
| 0 | 1 | 3 | -7.812228e-001 | -1.531215e-001 | -9.695834e-002 | -2.182048e-001 |
| 0 | 2 | 6 | 1.958740e-003 | 5.530905e-003 | 3.009592e-003 | 2.743847e-002 |
| 0 | 3 | 10 | 3.078706e-004 | 4.810893e-005 | -1.406214e-004 | 1.736766e-003 |
| 0 | 4 | 15 | 6.460063e-006 | -4.169802e-006 | -7.827152e-005 | -1.778852e-003 |
| 0 | 5 | 21 | -7.155882e-007 | 1.294771e-010 | -6.659100e-006 | -2.174033e-004 |
| 0 | 6 | 28 | 0.000000e+000 | 0.000000e+000 | 0.000000e+000 | 9.578189e-006 |
| 1 | 0 | 2 | 1.496710e+000 | 2.906973e-002 | 1.963331e-001 | 3.809971e-001 |
| 1 | 1 | 5 | 2.320350e-003 | 4.913123e-003 | 9.992371e-003 | -1.691716e-002 |
| 1 | 2 | 9 | -5.423841 e-004 | 3.048980e-004 | 1.913540e-003 | -2.514755e-003 |
| 1 | 3 | 14 | -2.569728e-005 | 2.876553e-005 | 3.820120e-004 | 3.443101e-004 |
| 1 | 4 | 20 | -1.002203e-007 | -1.152883e-006 | 3.039797e-005 | 3.463227e-004 |
| 1 | 5 | 27 | 0.000000e+000 | 0.000000e+000 | 0.000000e+000 | 1.824457e-004 |
| 1 | 6 | 35 | 0.000000e+000 | 0.000000e+000 | 0.000000e+000 | 4.422777e-005 |
| 2 | 0 | 4 | 5.147623e-003 | -8.994150e-004 | -8.849176e-004 | -2.917254e-002 |
| 2 | 1 | 8 | 2.671193e-004 | -3.707353e-004 | -3.086351e-004 | -1.274667e-002 |
| 2 | 2 | 13 | 5.593883e-005 | -1.528543e-005 | -5.238054e-005 | -5.634069e-003 |
| 2 | 3 | 19 | 4.017967e-006 | 4.639629e-006 | 1.089040e-005 | -9.635637e-004 |
| 2 | 4 | 26 | 5.602905e-008 | -1.433568e-007 | 3.546340e-006 | -3.502309e-004 |
| 2 | 5 | 34 | 0.000000e+000 | 0.000000e+000 | 0.000000e+000 | -1.322886e-004 |
| 3 | 0 | 7 | -8.579227e-004 | 2.524392e-004 | -5.431761e-004 | -5.282344e-003 |
| 3 | 1 | 12 | -7.451077e-006 | -1.578617e-005 | 1.932622e-005 | -2.095379e-003 |
| 3 | 2 | 18 | -6.144115e-006 | -2.864958e-006 | -2.274442e-005 | 4.164574e-004 |
| 3 | 3 | 25 | -2.684070e-007 | 3.834197e-007 | -7.089393e-006 | 8.088923e-004 |
| 3 | 4 | 33 | 0.000000e+000 | 0.000000e+000 | 0.000000e+000 | 2.862418e-004 |
| 4 | 0 | 11 | 1.844420e-005 | 1.445034e-005 | 1.370185e-005 | -2.553006e-003 |
| 4 | 1 | 17 | 3.271372e-006 | -1.685033e-006 | 5.353489e-006 | -1.091894e-003 |
| 4 | 2 | 24 | 3.556975e-007 | -2.748172e-007 | 4.917033e-006 | -5.902346e-004 |
| 4 | 3 | 32 | 0.000000e+000 | 0.000000e+000 | 0.000000e+000 | -2.514605e-004 |
| 5 | 0 | 16 | -1.148306e-006 | 1.556132e-006 | -5.349622e-006 | -4.384465e-005 |
| 5 | 1 | 23 | -2.151692e-007 | 3.109116e-009 | -1.549379e-006 | 2.614591 e-004 |
| 5 | 2 | 31 | 0.000000e+000 | 0.000000e+000 | 0.000000e+000 | 1.283256e-004 |
| 6 | 0 | 22 | 4.878059e-008 | 4.028435e-008 | 7.883487e-007 | -8.741985e-006 |
| 6 | 1 | 30 | 0.000000e+000 | 0.000000e+000 | 0.000000e+000 | -2.600512e-005 |
| 7 | 0 | 29 | 0.000000e+000 | 0.000000e+000 | 0.000000e+000 | 5.870927e-006 |

Die Freiformflächen der Facetten 39 der Fresnelstruktur 31 genügen der Formel

$$z = \sum_{j=1}^{66} C_j x^m y^n \quad \text{mit} \quad j = \frac{(m+n)^2 + m + 3n}{2}.$$

Dabei repräsentieren die Koeffizienten des j-ten Polynomglieds, m und n ganze Zahlen und x und y die Koordinaten in x- und y-Richtung des lokalen Koordinatensystems. Aus dem mittels der Formel gewonnenen Wert für z wird dann ein effektiver z-Wert (z-effektiv) ermittelt, wobei das Ermitteln von z-effektiv gemäß der folgenden Formel erfolgt

$$z\text{-effektiv} = \text{floor}(z, t),$$

wobei t für die Tiefe der Fresnelstruktur steht und die Floor-Funktion dafür sorgt, dass der Wert für z nicht zu einer Überschreitung des maximalen Wertes für die Tiefe t der Fresnelstruktur 31, die im vorliegenden Beispiel 0,45 mm beträgt, führt. Die Koeffizienten $C_j$, der Index j und die ganzen Zahlen m, n, aus denen sich der Index j berechnet, sind in Tabelle 4 angegeben.

Tabelle 4

| j | m | n | $C_j$ |
|---|---|---|---|
| 2 | 0 | 1 | 0.145848 |
| 5 | 0 | 2 | 0.000945109 |
| 9 | 0 | 3 | 0.000084 |
| 14 | 0 | 4 | -0.000002 |
| 20 | 0 | 5 | -1.384164e-007 |
| 1 | 1 | 0 | -0.537173 |
| 4 | 1 | 1 | 0.000858145 |
| 8 | 1 | 2 | 0.000051 |
| 13 | 1 | 3 | -0.000007 |
| 19 | 1 | 4 | -0.000001 |
| 26 | 1 | 5 | -2.045896e-008 |
| 3 | 2 | 0 | -0.000696924 |
| 7 | 2 | 1 | 0.000078 |
| 12 | 2 | 2 | 0.00001 |
| 18 | 2 | 3 | 0.000001 |
| 25 | 2 | 4 | 1.860516e-008 |
| 6 | 3 | 0 | -0.000054 |
| 11 | 3 | 1 | -0.000021 |
| 17 | 3 | 2 | -0.000002 |
| 24 | 3 | 3 | -8.679409e-008 |
| 10 | 4 | 0 | 0.000002 |
| 16 | 4 | 1 | 0.000001 |
| 23 | 4 | 2 | 7.693742e-008 |
| 15 | 5 | 0 | -0.000001 |
| 22 | 5 | 1 | -6.366967e-008 |

Mit dem beschriebenen konkreten Ausführungsbeispiel ist es möglich, die folgenden Kenngrößen für die Abbildungsvorrichtung zu erzielen:

- Field of View (FOV): 13 Grad x 7,3 Grad (Diagonale 15 Grad)
- Größe der Eyebox: 8 mm x 10 mm
- Größe des Bildgebers: 6,4 mm x 4,8 mm (genutzt 6,4 mm x 3,6 mm)
- virtueller Objektabstand: 3 m
- Brillenglasdicke: 4 mm

Das der Erfindung zugrundeliegende Konzept, welches mit Bezug auf die Ausführungsbeispiele beschrieben worden ist, ermöglicht ohne größeren Aufwand eine Erhöhung des Field of View in y-Richtung, das heißt der Wert von 7,3 Grad könnte bei Bedarf auf mindestens 10 Grad erhöht werden. Das Gleiche gilt auch für die Eyebox. Hier könnte der Wert von 10 mm auf 15 mm erweitert werden.

Die vorliegende Erfindung wurde anhand konkreter Ausführungsbeispiele zu Erläuterungszwecken detailliert beschrieben. Es versteht sich jedoch, dass die Erfindung nicht ausschließlich auf die vorliegenden Ausführungsbeispiele beschränkt sein soll. Insbesondere sind Abweichungen von den beschriebenen Ausführungsbeispielen möglich. So kann die Ablenkung der Strahlen an den Facetten der Fresnelstruktur einen beliebigen Wert im Bereich zwischen 45 und 55 Grad annehmen. Ebenso kann die Tiefe t der Fresnelzonen einen beliebigen Wert im Bereich zwischen 0,35 und 0,5 mm aufweisen. Auch die Krümmungsradien der Innenfläche und der Außenfläche des Brillenglases können von dem angegebenen Wert abweichen, solange sie zwischen 100 und 150 mm liegen. Zudem können sich die Krümmungsradien der Außenfläche und der Innenfläche deutlicher voneinander unterscheiden als dies im vorliegenden Ausführungsbeispiel der Fall ist, insbesondere wenn mit dem Brillenglas auch eine Fehlsichtigkeit korrigiert werden soll. Schließlich sei noch angemerkt, dass in der erfindungsmäßen Datenbrille 1 auch das zweite Brillenglas 5 Teil einer zweiten erfindungsgemäßen Abbildungsoptik sein kann, die der beschrieben Abbildungsoptik entspricht. Der Bildgeber hierfür wäre dann zwischen dem zweiten Brillenbügel 11 und zweiten Brillenglas 5 angeordnet. Die vorliegende Erfindung soll daher lediglich durch die beigefügten Ansprüche beschränkt sein.

**Patentansprüche**

1. Abbildungsoptik zum Erzeugen eines virtuellen Bildes von einem auf einem Bildgeber (21) dargestellten Ausgangsbild, umfassend:

   - wenigstens ein vor dem Auge zu tragendes Brillenglas (3), welches eine dem Auge zuzuwendende Innenfläche (13) und eine vom Auge abzuwendende Außenfläche (17) aufweist,
   - eine Einkopplungseinrichtung (23) zum Einkoppeln eines vom Ausgangsbild ausgehenden Abbildungsstrahlengangs zwischen die Innenfläche (13) und die Außenfläche (17) des Brillenglases (3), und
   - eine in dem Brillenglas (3) vorhandene Fresnelstruktur (31) zum Auskoppeln des Abbildungsstrahlengangs aus dem Brillenglas (3) in Richtung auf das Auge,
   wobei die Einkopplungseinrichtung (23) den Abbildungsstrahlengang derart zwischen die Innenfläche (13) und die Außenfläche (17) des Brillenglases (3) einkoppelt, dass er durch Reflexionen zwischen der Innenfläche (13) und der Außenfläche (17) zur Fresnelstruktur (31) geleitet wird,
   wobei
   die Fresnelstruktur (31) Fresnelflächen (39) aufweist, welche eine Basisablenkung ($\Theta$) der Strahlen des Abbildungsstrahlengangs um 45 bis 55 Grad herbeiführen,
   **dadurch gekennzeichnet, dass**
   - das Brillenglas (3) einen Krümmungsradius zwischen 100 mm und 150 mm besitzt,
   - im Brillenglas (3) zwischen der Einkopplungseinrichtung (23) und der Fresnelstruktur (31) eine Randverdickung (37) vorhanden ist, in der die Dicke des Brillenglases (3) größer als im Bereich der Fresnelstruktur (31) ist und
   - die Einkopplungseinrichtung (23) den Abbildungsstrahlengang derart zwischen die Innenfläche (13) und die Außenfläche (17) des Brillenglases (3) einkoppelt, dass die erste Reflexion (R1) nach dem Einkoppeln an der Außenfläche (17) des Brillenglases (3) erfolgt und die zweite Reflexion (R2) nach dem Einkoppeln im Bereich der Randverdickung (37) an einer an der Innenseite des Brillenglases (13) angeordneten Reflexionsfläche (41) erfolgt.

2. Abbildungsoptik nach Anspruch 1, **dadurch gekennzeichnet, dass** die Einkopplungseinrichtung (23) den Abbildungsstrahlengang derart zwischen die Innenfläche (13) und die Außenfläche (17) des Brillenglases (3) einkoppelt, dass der Abbildungsstrahlengang über vier Reflexionen (R1, R2, R3, R4) zur Fresnelstruktur (31) geleitet wird.

3. Abbildungsoptik nach Anspruch 1 oder Anspruch 2, **dadurch gekennzeichnet, dass** die im Bereich der Randverdickung (37) an der Innenfläche (13) des Brillenglases (13) angeordnete Reflexionsfläche (41) eine Abbildungsfehler zumindest teilweise korrigierende Freiformfläche (41) aufweist.

4. Abbildungsoptik nach einem der Ansprüche 1 bis 3, **dadurch gekennzeichnet, dass** die im Bereich der Randverdickung (37) an der Innenfläche (13) des Brillenglases (13) angeordnete Reflexionsfläche (41) eine Kegelschnittfläche ist, der die Freiformfläche überlagert ist.

5. Abbildungsoptik nach einem der Ansprüche 1 bis 4, **dadurch gekennzeichnet, dass** die Fresnelstruktur (31) eine Brennweite von mindestens 80 mm aufweist.

6. Abbildungsoptik nach Anspruch einem der Ansprüche 1 bis 5, **dadurch gekennzeichnet, dass** in die Einkopplungseinrichtung (23) eine Kollimationsoptik (25, 27, 29) zur Kollimation des Abbildungsstrahlengangs integriert ist.

7. Abbildungsoptik nach Anspruch 6, **dadurch gekennzeichnet, dass** die Einkopplungseinrichtung (23) eine Eintrittsfläche (25) sowie eine erste Spiegelfläche (27) und eine zweite Spiegelfläche (29) umfasst, wobei eine oder mehrere dieser Flächen die Kollimationsoptik bildet bzw. bilden.

8. Abbildungsoptik nach Anspruche 7, **dadurch gekennzeichnet, dass** die erste Spiegelfläche (27) eine Abbildungsfehler zumindest teilweise korrigierende Freiformfläche aufweist und/oder die zweite Spiegelfläche (29) eine Abbildungsfehler zumindest teilweise korrigierende Freiformfläche aufweist und/oder die Eintrittsfläche (25) eine Abbildungsfehler zumindest teilweise korrigierende Freiformfläche aufweist.

9. Abbildungsoptik nach Anspruch 7 oder Anspruch 8, **dadurch gekennzeichnet, dass** die erste Spiegelfläche (27) eine Kegelschnittfläche ist, der die Freiformfläche überlagert ist, und/oder die zweite Spiegelfläche (29) eine Kegelschnittfläche ist, der die Freiformfläche überlagert ist, und/oder die Eintrittsfläche (25) der Einkopplungseinrichtung (23) eine Kegelschnittfläche ist, der die Freiformfläche überlagert ist.

10. Abbildungsoptik nach einem der Ansprüche 6 bis 9, **dadurch gekennzeichnet, dass** die Kollimationsoptik (25, 27, 29) eine Brennweite zwischen 20 und 30 mm aufweist.

11. Abbildungsoptik nach einem der Ansprüche 1 bis 10, **dadurch gekennzeichnet, dass** die Fresnelflächen (39) Fresnelzonentiefen (t) zwischen 0,35 und 0,5 mm aufweisen.

12. Abbildungsoptik nach einem der Ansprüche 1 bis 11, **dadurch gekennzeichnet, dass** das Brillenglas (3) und die Einkopplungseinrichtung (23) eine monolithische Einheit bilden.

13. Datenbrille (1) mit einer Abbildungsoptik zum Erzeugen eines virtuellen Bildes nach einem der Ansprüche 1 bis 12.

**Claims**

1. Imaging optical unit for generating a virtual image of an initial image represented on an image generator (21), comprising:

   - at least one spectacle lens (3) to be worn in front of the eye, said spectacle lens having an inner surface (13) that is to face the eye and an outer surface (17) that is to face away from the eye,
   - an input coupling device (23) for coupling an imaging beam path emanating from the initial image in between the inner surface (13) and the outer surface (17) of the spectacle lens (3), and
   - a Fresnel structure (31) present in the spectacle lens (3) and serving for coupling the imaging beam path out from the spectacle lens (3) in the direction of the eye,
   wherein the input coupling device (23) couples the imaging beam path in between the inner surface (13) and the outer surface (17) of the spectacle lens (3) in such a way that it is guided by reflections between the inner surface (13) and the outer surface (17) to the Fresnel structure (31),
   wherein
   the Fresnel structure (31) has Fresnel surfaces (39), which bring about a base deflection of the rays of the imaging beam path by 45 to 55 degrees, **characterized in that**
   - the spectacle lens (3) has a radius of curvature of between 100 and 150 mm,
   - an edge thickening (37) is present in the spectacle lens (3) between the input coupling device (23) and the Fresnel structure (31), in which edge thickening the thickness of the spectacle lens (3) is greater than in the region of the Fresnel structure (31), and
   - the input coupling device (23) couples the imaging beam path in between the inner surface (13) and the outer surface (17) of the spectacle lens (3) in such a way that the first reflection (R1) takes place after the input coupling at the outer surface (17) of the spectacle lens (3) and the second reflection (R2) takes place after the input coupling in the region of the edge thickening (37) at a reflection surface (41) arranged on the inner side of the spectacle lens (13).

2. Imaging optical unit according to Claim 1, **characterized in that** the input coupling device (23) couples the imaging beam path in between the inner surface (13) and the outer surface (17) of the spectacle lens (3) in such a way that the imaging beam path is guided via four reflections (R1, R2, R3, R4) to the Fresnel structure (31).

3. Imaging optical unit according to Claim 1 or Claim 2, **characterized in that** the reflection surface (41) arranged on the inner surface (13) of the spectacle lens (13) in the region of the edge thickening (37) has a freeform surface (41) that at least partly corrects imaging aberrations.

4. Imaging optical unit according to any of Claims 1 to 3, **characterized in that** the reflection surface (41) arranged on the inner surface (13) of the spectacle lens (13) in the region of the edge thickening (37) is a conic section surface on which the freeform surface is superimposed.

5. Imaging optical unit according to any of Claims 1 to 4, **characterized in that** the Fresnel structure (31) has a focal length of at least 80 mm.

6. Imaging optical unit according to any of Claims 1 to 5, **characterized in that** a collimation optical unit (25, 27, 29) for collimating the imaging beam path is integrated into the input coupling device (23) .

7. Imaging optical unit according to Claim 6, **characterized in that** the input coupling device (23) comprises an entrance surface (25) and also a first mirror surface (27) and a second mirror surface (29), wherein one or a plurality of these surfaces forms or form the collimation optical unit.

8. Imaging optical unit according to Claim 7, **characterized in that** the first mirror surface (27) has a freeform surface that at least partly corrects imaging aberrations, and/or the second mirror surface (29) has a freeform surface that at least partly corrects imaging aberrations, and/or the entrance surface (25) has a freeform surface that at least partly corrects imaging aberrations.

9. Imaging optical unit according to Claim 7 or Claim 8, **characterized in that** the first mirror surface (27) is a conic section surface on which the freeform surface is superimposed and/or the second mirror surface (29) is a conic section surface on which the freeform surface is superimposed, and/or the entrance surface (25) of the input coupling device (23) is a conic section surface on which the freeform surface is superimposed.

10. Imaging optical unit according to any of Claims 6 to 9, **characterized in that** the collimation optical unit (25, 27, 29) has a focal length of between 20 and 30 mm.

11. Imaging optical unit according to any of Claims 1 to 10, **characterized in that** the Fresnel surfaces (39) have Fresnel zone depths (t) of between 0.35 and 0.5 mm.

12. Imaging optical unit according to any of Claims 1 to 11, **characterized in that** the spectacle lens (3) and the input coupling device (23) form a monolithic unit.

13. Smartglasses (1) comprising an imaging optical unit for generating a virtual image according to any of Claims 1 to 12.


## Revendications

1. Optique de reproduction permettant de produire une image virtuelle d'une image de sortie représentée sur un imageur (21), comprenant :

   - au moins un verre de lunettes (3) destiné à être porté devant l'œil et présentant une surface intérieure (13) faisant face à l'œil et une surface extérieure (17) opposée à l'œil,
   - un dispositif d'injection (23) servant à injecter entre la surface intérieure (13) et la surface extérieure (17) du verre de lunettes (3) un trajet de rayons de reproduction partant de l'image de sortie, et
   - une structure de Fresnel (31) présente dans le verre de lunettes (3) et servant à injecter le trajet de rayons de reproduction hors du verre de lunettes (3) dans la direction de l'œil,
   dans laquelle le dispositif d'injection (23) injecte le trajet de rayons de reproduction entre la surface intérieure (13) et la surface extérieure (17) du verre de lunettes (3) de manière à ce qu'il soit dirigé vers la structure de Fresnel (31) par des réflexions entre la surface intérieure (13) et la surface extérieure (17), dans laquelle
   la structure de Fresnel (31) présente des surfaces de Fresnel (39) qui provoquent une déviation de base ($\Theta$) des rayons du trajet de rayons de reproduction de 45 à 55 degrés,
   **caractérisé en ce que**
   - le verre de lunettes (3) possède un rayon de courbure compris entre 100 mm et 150 mm,
   - il est prévu dans le verre de lunettes (3), entre le dispositif d'injection (23) et la structure de Fresnel (31), un épaississement de bord (37) dans lequel l'épaisseur du verre de lunettes (3) est plus élevée que dans la zone de la structure de Fresnel (31) et
   - le dispositif d'injection (23) injecte le trajet de rayons de reproduction entre la surface intérieure (13) et la surface extérieure (17) du verre de lunettes (3) de manière à ce que la première réflexion (R1) se produise après l'injection au niveau de la surface extérieure (17) du verre de lunettes (3) et à ce que la deuxième réflexion (R2) se produise après l'injection dans la zone de l'épaississement de bord (37) au niveau d'une surface de réflexion (41) disposée à l'intérieur du verre de lunettes (13).

2.  Optique de reproduction selon la revendication 1, **caractérisée en ce que** le dispositif d'injection (23) injecte le trajet de rayons de reproduction entre la surface intérieure (13) et la surface extérieure (17) du verre de lunettes (3) de manière à ce que le trajet de rayons de reproduction soit guidé par l'intermédiaire de quatre réflexions (R1, R2, R3, R4) vers la structure de Fresnel (31).

3.  Optique de reproduction selon la revendication 1 ou la revendication 2, **caractérisée en ce que** la surface de réflexion (41) disposée dans la zone de l'épaississement de bord (37) sur la surface intérieure (13) du verre de lunettes (13) présente une surface de forme libre (41) qui corrige au moins partiellement les erreurs de reproduction.

4.  Optique de reproduction selon l'une des revendications 1 à 3, **caractérisée en ce que** la surface de réflexion (41) disposée dans la zone de l'épaississement de bord (37) sur la surface intérieure (13) du verre de lunettes (13) est une surface de section conique qui est superposée à la surface de forme libre.

5.  Optique de reproduction selon l'une des revendications 1 à 4, **caractérisée en ce que** la structure de Fresnel (31) présente une longueur focale d'au moins 80 mm.

6.  Optique de reproduction selon l'une des revendications 1 à 5, **caractérisée en ce qu'**une optique de collimation (25, 27, 29) servant à collimater le trajet de rayons de reproduction est intégrée dans le dispositif d'injection (23).

7.  Optique de reproduction selon la revendication 6, **caractérisée en ce que** le dispositif d'injection (23) comprend une surface d'entrée (25) et une première surface de miroir (27) et une deuxième surface de miroir (29), dans laquelle une ou plusieurs desdites surfaces forment l'optique de collimation.

8.  Optique de reproduction selon la revendication 7, **caractérisée en ce que** la première surface de miroir (27) présente une surface de forme libre qui corrige au moins partiellement les erreurs de reproduction et/ou la deuxième surface de miroir (29) présente une surface de forme libre corrigeant au moins partiellement les erreurs de reproduction et/ou la surface d'entrée (25) présente une surface de forme libre qui corrige au moins partiellement les erreurs de reproduction.

9.  Optique de reproduction selon la revendication 7 ou la revendication 8, **caractérisée en ce que** la première surface de miroir (27) est une surface de section conique qui est superposée à la surface de forme libre et/ou la deuxième surface de miroir (29) est une surface de section conique superposée à la surface de forme libre et/ou la surface d'entrée (25) du dispositif d'injection (23) est une surface de section conique superposée à la surface de forme libre.

10. Optique de reproduction selon l'une des revendications 6 à 9, **caractérisée en ce que** les optiques de collimation (25, 27, 29) présentent une longueur focale comprise entre 20 et 30 mm.

11. Optique de reproduction selon l'une des revendications 1 à 10, **caractérisée en ce que** les surfaces de Fresnel (39) présentent des profondeurs de zone de Fresnel (t) comprises entre 0,35 et 0,5 mm.

12. Optique de reproduction selon l'une des revendications 1 à 11, **caractérisée en ce que** le verre de lunettes (3) et le dispositif d'injection (23) forment une unité monolithique.

13. Lunettes de données (1) comportant une optique de reproduction servant à générer une image virtuelle selon l'une des revendications 1 à 12.

**FIG 1**

**FIG 2**

EP 3 237 960 B1

FIG 3

FIG 4

16

FIG 5

EP 3 237 960 B1

FIG 6

EP 3 237 960 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060126181 A1
- US 20100220295 A1
- EP 1385023 A1
- US 20120002294 A1
- US 20060228073 A1
- US 20140293434 A1